# EUROPEAN PATENT APPLICATION

(11) **EP 0 987 301 A1**
(43) Date of publication of application: **22.03.2000**
(21) Application number: 99307015.0
(22) Date of filing: 03.09.1999
(51) Int. Cl.: C08L 83/08, C08K 3/36

(54) **Anti-blocking fluorosilicone composition**

(30) Priority: 14.09.1998 US 152531
(71) Applicant: DOW CORNING CORPORATION, Midland Michigan 48686-0994 (US)
(72) Inventor: Maxson, Myron Tomothy, Sanford, Michigan 48657 (US); Stolarczyk, Jeffrey Joseph, Midland, Michigan 48642 (US)
(74) Representative: Kyle, Diana

(57) **Abstract**

A fluorosilicone composition with reduced blocking for improved handling as an uncured elastomer and that has low compression set in the final product comprising poly(trifluoropropyl)organosiloxane, greater than 35 weight percent reinforcing silica filler having a SET surface area of less than 50 m²/g, a filler treating agent added in an amount sufficient to allow filler incorporation into the polymer and a curing component. The composition preferably also comprises vinylmethyldi(N-alkylacetamide)silane as a chain extender, fluoropolymer powder and a polydimethylvinylsiloxane fluid.

## Description

This invention provides a curable fluorosilicone composition having improved handling characteristics as an uncured elastomer (anti-blocking) without sacrifice of physical properties in the cured product. Fluorosilicone elastomers are useful because of their wide service temperature range and their resistance to hydrocarbons and many chemical solvents. Usually, uncured fluorosilicone elastomers have a tacky surface with a high coefficient of friction. This may cause uncured pre-forms or parts made from the fluorosilicone to block or stick together, rendering both processing and handling difficult. These sticking or blocking characteristics result in extra work to separate or keep the uncured material from contact with itself. This tendency is especially evident when milling or immediately after extruding said fluorosilicone compositions. When blocking is severe, pre-formed fluorosilicone parts may fuse together and cannot be peeled apart or are deformed when separated.

One prior art approach to the above problem is to increase the surface lubricity by adding a nonfunctional, non-miscible oil to the composition. The oil migrates to the surface of the elastomer, providing lubricity to the surface. However, these oils typically adversely affect the compression set and the fluid resistance of the cured compositions. Moreover, when compositions containing such oils are post-cured to improve compression set, the oils are volatilized or decomposed thereby defeating the purpose of the addition.

It is known in the art that as the amount of reinforcing filler in a high consistency silicone elastomer composition is increased, the plasticity of the uncured composition increases. There is a point where additional amounts of filler cannot be added, as the composition crumbles and is unworkable. These factors limit the practical loading level of the most commonly used reinforcing fillers to 50 parts by weight of filler to 100 parts by weight of gum, that is, less than 33 weight percent filler. Increasing the BET surface area of the silica is also generally known to cause increased viscosity or plasticity of the uncured elastomer and the yield, stress, durometer and modulus of cured elastomers increases while elongation will decrease.

We have found that by using low surface area fumed silica greater amounts of filler can be added to polymer, compared to typical higher surface area fillers. Since in a fluorosilicone composition the most expensive components are the polymer and filler treating agent, compositions with higher filler content are less costly. Formulations with over 100 parts by weight reinforcing silica to 100 parts by weight polymer can be made with fumed silica having a surface area of less than 50 m²/g. The compositions of this invention are surprisingly easy to mix despite the high levels of reinforcing silica.

Before curing, the compositions of the present invention are easy to mill, have usable plasticity, are surprisingly dry to the touch and have little tendency to stick together. This anti-blocking feature is important to manufacturers who make multiple extrusions or pre-forms from the base prior to curing. After curing, the compositions of the present invention have unexpectedly good elastomeric properties.

In addition to reductions in cost and blocking, the compositions of our invention require less filler treating agent. The ratio of filler treating agent to filler can be reduced from 1:3 to less than 1:10. This further reduces surface tackiness and results in elastomers with lower overall volatile content and therefore less weight loss, shrinkage and extractables.

Another advantage is that the low surface area filler in compositions of this invention is incorporated into the polymer gum more quickly than a typical high surface area filler. This shortens the time for manufacturing fluorosilicone elastomer bases. Furthermore, lower surface area silica fillers interact less with the polymer in the elastomer. As a result, the cured elastomer is more elastic in nature, with less hysteresis loss and lower compression set compared with elastomers with equal filler loadings of higher surface area silicas.

The present invention is a fluorosilicone elastomer with reduced blocking for improved handling as an uncured elastomer and that has low compression set in the cured product. The fluorosilicone composition comprises:
(A) poly(trifluoropropyl)organosiloxane,
(B) greater than 35 weight percent reinforcing silica filler, based on the composition, where the silica filler has a BET surface area of less than 50 m²/g,
(C) a filler treating agent added in an amount sufficient to allow filler incorporation into the polymer,
(D) a curing component in an amount sufficient to cure the composition to an elastomer,
(E) 0 to 10 weight parts vinylmethyldi(N-alkylacetamide)silane per 100 parts of component (A),
(F) 0 to 10 weight percent, based on the total composition, of a fluoropolymer powder, and
(G) 0 to 2.5 weight percent , based on the total composition, of a polydimethylvinylsiloxane fluid.

Component (A) of the present invention is one or more poly(trifluoropropyl)-organosiloxane polymers. In the present specification, the term "trifluoropropyl" refers to the 3,3,3-trifluropropyl radical. The organo substituents of the poly(trifluoropropyl)organosiloxane may be alkyl, aryl or alkenyl. Preferably the organo substituents of the poly(trifluoropropyl)organosiloxane are selected from methyl, phenyl, phenyl-methyl, vinyl, methylvinyl and hexenyl. It is preferred that the alkenyl-containing substituents of component (A) be present at less than 2 mole percent of the siloxy units. It is more preferred that component (A) be substantially free of pendant alkenyl groups along the backbone. Formuiations of this invention that contain pendant alkenyl groups have been found to form cured elastomers with high modulus and durometer value but have lower elongation and tear strength. Component (A) is preferably a high molecular weight gum having a Williams plasticity number within a range of 100 mm to 400 mm. Herein, all Williams plasticity numbers are as determined by ASTM D926-67 at 25°C, and are expressed as sample height times 100. Most preferably, Component (A) is selected to work with optional Component (E) to optimize physical properties of the polymer by chain extension as discussed below.

The present composition comprises greater than 35 weight percent of (B), a reinforcing silica filler with a BET surface area of less than 50 m²/g. The reinforcing silica is preferably a fumed silica. The BET surface area is determined by the Burnauer-Emmet-Teller (BET) method which is based on nitrogen adsorption and is described in The Journal of the American Chemical Society, 60 p. 309 (February, 1938). By "reinforcing" it is meant that the reinforcing silica filler interacts with the poly(trifluoropropyl)organosiloxane of the present composition to improve the cured elastomer physical properties in comparison to the cured composition without the reinforcing silica. This is in contrast to non-reinforcing fillers such as quartz or diatomaceous earth that have little interaction with the polymer and which may cause physical properties to deteriorate when used at high levels. Reinforcing silica fillers useful in this invention have a BET surface area less than 50 m²/g, and preferably in a range of 10 to less than 50 m²/g. When the surface area of the reinforcing silica filler is greater than 50 m²/g, the resulting fluorosilicone elastomer base becomes stiff and viscous, making the base difficult to process. When the surface area of the reinforcing silica filler is too low, the physical properties of the cured elastomer are less useful. The presence of greater than 35 weight percent reinforcing silica results in a fluorosilicone surface that is less sticky to the touch and yet has good physical properties. Preferably the reinforcing silica filler comprises from 35 to 60 weight percent of the composition of the present invention.

Component (C) is a filler treating agent added in amount sufficient to allow incorporation of the reinforcing silica filler into the poly(trifluoropropyl)organosiloxane. The filler treating agent acts to make the silica filler more hydrophobic. This treatment of the reinforcing silica improves the compatibility of the reinforcing silica with other components of the composition and reduces the phenomena typically referred to as "crepe" which occurs during storage of the compositions. Creping is characterized by an increase in viscosity or plasticity of a composition to the extent that processing by conventional techniques and equipment becomes difficult. Filler treating agents used in silicone rubber art may also be referred to as plasticizers or anti-structure additives.

The filler treating agent is one or more of the organosilicon compounds known in the art for effecting such treatment. The filler treating agent may be selected from liquid silanol-containing organosilicon compounds and organosilicon compounds such as organodisilazanes which hydrolyze to form these compounds under the conditions used to treat the silica. The hydrolyzable precursors of silanol-containing filler creating agents include cyclic polydiorganosiloxanes, silazanes and linear polydiorganosiloxanes containing alkoxy or other readily hydrolyzable groups. In the present compositions, it is preferred that the reinforcing silica be treated with an oligomeric hydroxyl end-blocked polytrifluoropropylmethylsiloxane. More preferred is when the oligomeric hydroxyl end-blocked polytrifluoropropylmethylsiloxane comprises 3 to 7 (3,3,3-trifluorpropyl)methylsiloxy units per molecule. The presence of the trifluoropropylmethylsiloxy units on the reinforcing treated silica improves the compatibility of the silica with component (A). Even more preferred is when Component C comprises an oligomeric polysiloxane comprising dimethylsiloxy units and vinylmethylsiloxy units, in addition to the oligomeric hydroxyl end-blocked polytrifluoropropylmethylsiloxane filler treating agent.

The amount of Component (C) used is at least 1 part by weight Component (C) for 20 parts by weight Component (B). At less than one part Component (C) to 20 parts component (B), the filler is difficult to incorporate into Component (A). Preferably, the amount of Component (C) is 1 part by weight Component (C) to 10 to 20 parts by weight Component (B). More than 1 part by weight Component (C) for 10 parts by weight Component (B) is not necessary for incorporation of the filler into the composition and is uneconomical.

Component (D) of the present composition is a curing component. Curing components for fluorosilicone elastomers are well known. Examples of Component (D) include organic peroxides and mixtures of organohydrogensiloxane and a platinum-group metal hydrosilation catalyst.

When Component (D) is a mixture of organohydrogensiloxane and a platinum-group metal hydrosilation catalyst, the composition of this invention is cured by means of an addition reaction. The organohydrogensiloxane is added at a concentration sufficient to provide 1 to 5 silicon-bonded hydrogen atoms per silicon-bonded alkenyl radical provided to the composition by component (A). The platinum-group metal hydrosilation catalyst can be present in an amount equivalent to as little as one part by weight elemental platinum per one million parts of the curable composition. Catalyst concentrations equivalent to 5 to 50 parts by weight of elemental platinum per one million parts of the curable composition are preferred to achieve a practical curing rate.

Component (D) of the present composition can also be an organic peroxide. Useful organic peroxides include hydroxyperoxides, dialkyl peroxides, diacyl peroxides, peroxy esters, peroxy dicarbonates, ketone peroxides and mixtures thereof including ditertiary butylperoxide, tertiary butyl perbenzoate, dicumyl peroxide, 2,5-bis(tert-butylperoxy)-2,5-dimethyl hexane and tert-butylperoxy isopropyl carbonate. A preferred catalyst for use in the present composition is 2,5-bis(tert-butyl peroxy)-2,5-dimethyl hexane. The amount of Component (D) added to the present composition is that sufficient to effect cure of the composition to a fluorosilicone elastomer and depends upon the particular organic peroxide used.

The present composition comprises 0 to 10 weight parts of Component (E). In a preferred composition, Component (E) comprises 0.05 to 10 weight parts of vinylmethyldi(N-alkylacetamido)silane per 100 parts of component A. More preferred is when the composition comprises 0.5 to 5 weight parts of vinylmethyldi(N-alkylacetamido)silane on the same basis. In the vinylmethyldi(N-alkylacetamido)silane, the alkyl group substituted on nitrogen can comprise one to 4 carbon atoms. The alkyl group substituted on the nitrogen atom of the vinylmethyldi(N-alkylacetamido)silane is, for example, methyl, ethyl, propyl or tert-butyl. Preferred is when component (E) is vinylmethyldi(N-methylacetamido)silane. The method of making component (E) is not critical and can be any of those known in the art including the process described in U.S. Patent 3,776,934.

The use of Component (E) in the present composition results in a chain extension of the poly(trifluoropropyl)organosiloxane. The use of chain extension technology is taught in U.S. Patents 5,171,733 and 5,569,698. The use of chain extension technology together with the use of a low surface area reinforcing silica filler (B) is preferred because of improved physical properties of the resulting elastomer.

Optional Component (F) is a fluoropolymer powder. Preferably the fluoropolymer is a tetrafluoroethylene. More preferably, the fluoropolymer is a tetrafluoroethylene hexafluoropropylene copolymer. Preferably, the fluoropolymer powder is added in a range of 1 to 10 weight percent. The fluoropolymer powders employed in this invention are commercially available. The fluoropolymer powder is introduced into the siloxane in particle form by mixing it into a base comprising components (A), (B), (C), (E) and (G), using a sigma blade mixer or a device such as a two-roll mill.

Optional Component (G) is a polydimethyvinylsiloxane fluid, which improves the handling characteristics of the uncured composition. Component (G) is added at 0.5 to 2.5 weight percent, based on the total weight of the composition. The polydimethylvinylsiloxane has vinyl groups which contribute to the crosslink density of the cured polymer. The fluid may be polydimethylvinylsiloxane or may be a dimethyl-methylvinyl siloxane copolymer. The polymer preferably has at least 20 percent methylvinyl units on the polymer units in the chain giving a weight percent vinyl of at least 7 percent. The fluid has a viscosity in the range of 1000 to 100,000 mPa·s, preferably in the range of 8000 to 25,000 mPa·s.

The following ingredients were used to formulate examples:
Gum 1 - hydroxy end-blocked poly(trifluoropropyl)-methyl-siloxane having a Williams plasticity number of 250 to 350 mm.
Gum 2 - hydroxy end-blocked poly(trifluoropropyl) methyl-vinylmethylsiloxane having a Williams plasticity number of 250 to 350 mm and a methylvinyl content of 0.6 percent.
Gum 3 - hydroxy end-blocked poly(dimethyl) vinylmethylsiloxane polymer having a Williams plasticity number of 100 to 200 mm.
Gum 4 - hydroxy end-blocked poly(trifluoropropyl) methylvinylmethylsiloxane having a Williams plasticity number of 250 to 350 mm and a methylvinyl content of 1.0 percent.
Chain Extender - methylvinyldi(N-methylacetamido)-silane
Filler treating agent 1 - hydroxy end-blocked trifluoropropylmethylsiloxane oligomer having 3 to 7 siloxy units per molecule
Filler treating agent 2 - hydroxy end-blocked dimethylmethylvinyl siloxane oligomer having 3 to 7 siloxy units per molecule.
Filler treating agent 3 - tetramethyldivinylsilazane.
Filler treating agent 4 - hydroxy end-blocked methylvinylsiloxane oligomer having 3 to 10 siloxy units per molecule
Fluid - hydroxy end-blocked dimethylmethylvinylsiloxane copolymer, having a viscosity of 20,000 mPa·s and 22 mole percent methylvinyl units.
Filler 1 - Fumed silica having a BET surface of 40 m²/g, Degussa Corporation, Ridgefield Park, NJ.
Filler 2 - Fumed silica having a BET surface area of 90 m²/g, Cabot Corp. Tuscola, IL.
Filler 3 - Fumed silica having a BET surface area of 150 m²/g, Cabot Corp. Tuscola, IL.
Filler 4 - Fumed silica having a BET surface area of 250 m²/g, Cabot Corp. Tuscola, IL.
Filler 5 - Stearate-treated calcium carbonate, Georgia Marble Corp. Kennesaw, GA.
Filler 6 - Fumed silica having a BET surface of 45 m²/g Cabot Corp. Tuscola, IL.
Additive 1 - Isopropyl alcohol
Additive 2 - tetrafluoroethylene hexafluoropropylene copolymer, Teflon® MP 1500 powder, E.I. duPont de Nemours & Co. Barley Mill Plaza, Wilmington DE 19898

### Example 1

Seven fluorosilicone base compositions (see Table 1) were made. The quantity of each listed ingredient is in parts. The Williams plasticity number in mm and the anti-blocking value for each base is reported in Table 1.

Anti-blocking values for each uncured fluorosilicone base were determined as follows:
(1) Two sample balls of each fluorosilicone composition, each ball weighing 3.5 grams were prepared.
(2) Each of the two sample balls were formed into a cylinder by pressing between the plates of a Williams plastometer, Precision Scientific P-4, Chicago IL, for 20 seconds.
(3) The resulting two cylinders of material were butted and pressed together for 30 seconds between the plates of the Williams plastometer.
(4) Samples were rated on ease of separation after removal from the plastometer according to the following judgment scale:

| Rating | Separation |
|---|---|
| 0 | Cylinders fall apart by their own weight |
| 1 | Cylinders are easy to peel apart by hand. No tackiness, stringing or fuzz |
| 2 | Cylinders are easy to peel apart by hand. Slight tack. No stringing or fuzz. |
| 3-5 | Cylinders are easy to peel apart. Some tack. No fuzz or stringing. |
| 6-8 | Cylinders are somewhat hard to peel apart. Very tacky. Some fuzz and stringing |
| 9-10 | Cylinders are totally fused together. Cannot peel them apart |

The results shown in Table 1 indicate that high loadings of low surface area silica and other ingredients of this invention provide a composition that in the uncured state have little or no self stickiness. (Samples 1-1, 1-2). While it is generally known that compounds with high plasticity or green strength, have reduced stickiness, these results show that high plasticity alone cannot eliminate blocking. (Sample 1-7 vs. 1-1). The addition of a Teflon® fluoropolymer powder further reduces blocking. (Samples 1-2 vs. 1-1).

**Table 1 -**

| Plasticity and anti-blocking properties of seven uncured fluorosilicon compositions | | | | | | | |
|---|---|---|---|---|---|---|---|
| Ingredient | Sample 1-1 | Sample 1-2 | Sample 1-3 | Sample 1-4 | Sample 1-5 | Sample 1-6 | Sample 1-7 |
| Formulas | | | | | | | |
| Gum 1 | 50.5 | 50.5 | 56.8 | 63.0 | 58.5 | 55.3 | 62.4 |
| Gum 2 | | | | | 13.2 | 12.4 | |
| Gum 3 | | | | | 1.4 | 1.4 | |
| Chain Extender | 0.5 | 0.5 | 0.5 | 0.3 | 0.4 | 0.5 | 0.6 |
| Filler treating agent 1 | 3.6 | 3.6 | 2.8 | 3.0 | 3.7 | 4.5 | 7.7 |
| Filler treating agent 2 | | | | | 0.4 | 0.5 | 0.3 |
| Fluid 1 | 1.1 | 1.1 | 1.3 | 1.0 | | | 1.3 |
| Filler 1 | 32.4 | 32.4 | 28.2 | 24.2 | 20.6 | | |
| Filler 2 | 10.8 | 10.8 | 9.4 | 7.4 | | | |
| Filler 3 | | | | | | 22.8 | |
| Filler 4 | | | | | | | 25.9 |
| Filler 5 | 1.0 | 1.0 | 0.9 | 1.0 | 1.5 | 1.4 | |
| Additive 1 | | | | | | 0.7 | 0.6 |
| Additive 2 | | 5.0 | | | | | |

| **Test results** | | | | | | | |
|---|---|---|---|---|---|---|---|
| Plasticity (mm) | 344 | 441 | 361 | 338 | 295 | 336 | 397 |
| Anti-block rating | 2 | 1 | 2.5 | 4 | 10 | 10 | 9.5 |

### Example 2

The effect of the reinforcing silica's surface area on the physical properties of uncured fluorosilicone elastomers and the mechanical properties of the cured compositions were evaluated.

Said compositions were prepared by first formulating a base from gum, fluid, filler treating agent and filler. These base samples were cured by adding 1 weight part catalyst mixture containing 45 weight % 2,5 dimethyl-2,5-bis(t-butylperoxy) hexane and 1 weight part heat additive containing 50 weight % cerium hydrate, to 100 weight parts of base and press-curing for 10 minutes at 171°C., followed by a 4 hour post-cure in a hot air oven at 200°C. Standard elastomer properties were evaluated and are reported in Table 2. The test results demonstrate that low surface area fillers result in lower values for durometer, tensile, tear die B, 100% modulus and compression set when compared to a similar composition prepared with a high surface area filler.

**Table 2.**

| Physical propertie of fluorosilicones with low surface area filler | | | | |
|---|---|---|---|---|
| | Sample 2-1, Typical Fluorosilicone | Sample 2-2 | Sample 2-3 | Sample 2-4 |
| **Formulas** | | | | |
| Gum 2 | 70 | 70 | 70 | 70 |
| Fluid 1 | 1.4 | 1.4 | 1.4 | 1.4 |
| Filler treating agent 1 | 7.1 | 5.0 | 5.0 | 5.0 |
| Filler 4 | 21 | | | |
| Filler 6 | | 21 | 40 | |
| Filler 1 | | | | 40 |

| **Test results** | | | | |
|---|---|---|---|---|
| Filler surface area, m²/g | 250 | 45 | 45 | 40 |
| Base Plasticity/Recovery, mm | 282/ no measure | 185/195 | 208/215 | 215/223 |

| **Cured Properties** | | | | |
|---|---|---|---|---|
| Durometer ShA, ASTM D 2240 | 40 | 18 | 30 | 30 |
| Tensile (MPa), ASTM D412 | 9.66 | 4.58 | 6.43 | 6.25 |
| Tear Die B (kNm), ASTM D624 | 21.11 | 6.16 | 15.66 | 14.78 |
| Elongation (%), ASTM D412 | 450 | 514 | 509 | 520 |
| Modulus 100% (MPa), ASTM D412 | 0.83 | 0.36 | 0.66 | 0.72 |
| Resiliency Bashore (%), ASTM D2632 | 18 | 30 | 17 | 16 |
| Compression Set (22 hr/177°C) ASTM 395, Method B | 13 | 10 | 10 | 16 |
| Sp. Gr. (g/cc) | 1.40 | 1.44 | 1.52 | 1.55 |
| g/cc = g/cm3 | | | | |

### Example 3

Samples were made to demonstrate the feasibility of a higher strength anti-blocking fluorosilicone composition with low surface area silica. The formulations and the resulting properties are listed in Table 3. These samples were prepared by first formulating a base from gum, fluid, filler treating agent and filler. The base samples were cured by adding 1 weight part catalyst mixture containing 45 weight % 2,5 dimethyl-2,5-bis(t-butylperoxy) hexane and 1 weight part heat additive containing 50 weight % cerium hydrate to 100 parts base, press-curing for 10 minutes at 171°C. followed by a post cure of 4 hours at 200°C. This example shows that is possible to make fluorosilicone compositions of varying hardness and acceptable physical properties, while using filler loadings over 35 weight percent, using chain extender. The formulations are given in parts.

**Table 3.**

| Properties of fluorosilicone made with low surface area filler and chain extender | | | | | |
|---|---|---|---|---|---|
| | Sample 3-1 | Sample 3-2 | Sample 3-3 | Sample 3-4 | Sample 3-5 |
| **Formulas** | | | | | |
| Gum 1 | 70 | 70 | 70 | 70 | 70 |
| Chain Extender | 0.7 | 0.7 | 0.7 | 0.7 | 0.7 |
| Fluid 1 | 1.4 | 1.4 | 1.4 | 1.4 | 1.4 |
| Filler treating agent 1 | 3 | 3 | 4.7 | 5.6 | 7.5 |
| Filler 6 | 35 | 45 | 55 | 65 | 75 |
| wt % filler | 31 | 37.5 | 41.7 | 45.6 | 48.5 |

| **Test Results** | | | | | |
|---|---|---|---|---|---|
| plasticity/recovery mm | 269/292 | 282/305 | 300/ | 208/328 | 305/321 |

| **Cured properties** | | | | | |
|---|---|---|---|---|---|
| Durometer, ShA, ASTM D2240 | 32 | 43 | 51 | 54 | 59 |
| Tensile (MPa), ASTM D412 | 8.6 | 8.0 | 7.95 | 7.48 | 6.57 |
| Tear Die B (kNm), ASTM D624 | 20.2 | 18.5 | 26.6 | 29.0 | 23.4 |
| E1ongation(%), ASTM D412 | 473 | 350 | 328 | 320 | 286 |
| Modulus 100% (MPa) ASTM D412 | 0.83 | 1.34 | 1.70 | 1.89 | 1.92 |
| Resiliency Bashore (% Rebound) ASTM D2632 | 25 | 22 | 14 | 12 | 8 |
| Compression Set %)ASTM D395 (22 hr/177°C) | 5 | 2 | 6 | 9 | 11.6 |
| Sp. Gr., g/cc | 1.51 | 1.53 | 1.56 | 1.61 | 1.65 |
| Volume Change in RFB, 24 hr@23°C, ASTM D471 | 16.8 | 16.2 | 14.9 | 14.0 | 13.6 |
| g/cc = g/cm3 | | | | | |

### Example 4

Fluorosilicone elastomers made with high amounts of low surface area filler have properties similar to those made with conventional filler by replacing the conventional fluorosilicone gum with Gum 1 and using methylvinyldi(N-methyl acetamido)silane. The formulations and the resulting properties are listed in Table 4. These samples were prepared by first formulating a base from gum, fluid, filler treating agent and filler. The base samples were cured by adding 1 weight part catalyst mixture containing 45 weight % 2,5 dimethyl-2,5-bis(t-butylperoxy) hexane and 1 weight part heat additive containing 50 weight % cerium hydrate, to 100 parts base, press-curing for 10 minutes at 171°C followed by a post cure of 4 hours at 200°C. Samples 4-1 and 4-2 are made with conventional silica added at conventional levels to a nominal 40 durometer and 60 durometer, respectively. Samples 4-3 and 4-4 are made with low surface area filler, also added to reach nominal 40 durometer and 60 durometer, respectively. The amount of filler treating agent in samples 4-3 and 4-4 is smaller than that of samples 4-1 and 4-2.

**Table 4.**

| Fluorosilicone compositions with low surface area silica and chain extender | | | | |
|---|---|---|---|---|
| | Sample 4-1 | Sample 4-2 | Sample 4-2 | Sample 4-4 |
| **Formulas** | | | | |
| Gum 2 | 70.4 | 70 | | |
| Gum 1 | | | 70 | 70 |
| Chain extender | | | 0.7 | 0.7 |
| Fluid 1 | 1.4 | 1.3 | 1.4 | 1.4 |
| Filler treating agent 1 | 7.1 | 9.3 | 3.0 | 5.4 |
| Filler treating agent 4 | | 0.2 | | |
| Filler 4 | 21.1 | 28.1 | | |
| Filler 6 | | | 45.3 | 65.2 |

| **Test Results** | | | | |
|---|---|---|---|---|
| Base plasticity (mm) | 282 | 308 | 282 | 308 |

| **Cured Properties** | | | | |
|---|---|---|---|---|
| Durometer ShA ASTM D2240 | 40 | 60 | 43 | 54 |
| Tensile (MPa)ASTM D412 | 9.66 | 8.97 | 8.0 | 7.48 |
| Tear Die B (kNm), ASTM D624 | 21.1 | 26.4 | 18.5 | 29.0 |
| Elongation (%)ASTM D412 | 450 | 325 | 350 | 320 |
| Modulus 100% (MPa) ASTM D412 | 0.83 | 2.07 | 1.34 | 1.89 |
| Resiliency Bashore (%Rebound) ASTM D2632) | 18 | 16 | 21 | 12 |
| Compression Set (%) (22 hr/177°C) | 13 | 14 | 2 | 9 |
| Volume Change in RFB, 24 hr@23°C, ASTM D471 | 18 | 18 | 16 | 14 |
| Sp. Gr. g/cc | 1.40 | 1.45 | 1.54 | 1.61 |
| g/cc = g/cm3 | | | | |

### Example 5

The following example shows the effect of methylvinyl units in the fluorosilicone backbone or pendant vinyl groups along the polymer chain. Gum 1 is substantially free of methyl vinyl units. Gum 2 contains 0.6 mole % methyl vinyl and gum 4 contains 1.0 mole % methyl vinyl. The formulations and the resulting properties are listed in Table 5. These samples were prepared by first formulating a base from gum, fluid, filler treating agent and filler. The base samples were cured by adding 1 weight part catalyst mixture containing 45 weight % 2,5 dimethyl-2,5-bis(t-butylperoxy) hexane and 1 weight part heat additive containing 50 weight % cerium hydrate to 100 parts base, press-curing for 10 minutes at 171°C. followed by a post cure of 4 hours at 200°C. The results show that fluorosilicone polymers with vinyl along the chain result in cured elastomer with higher modulus, durometer and compression set, they result in lower elongation and tear.

**Table 5.**

| Effect of mole % vinyl in gum on fluorosilicone elastomers made with low surface area filler | | | |
|---|---|---|---|
| | 5-1 | 5-2 | 5-3 |
| **Formulas** | | | |
| Gum 1 | 70 | | |
| Gum 2 | | 70 | |
| Gum 3 | | | 70 |
| Chain Extender | 0.7 | 0.7 | 0.7 |
| Fluid 1 | 1.4 | 1.4 1.4 | |
| Filler treating agent 1 | 4.7 | 4.7 | 4.7 |
| Filler 6 | 55.0 | 55.0 | 55.0 |

| **Test results** | | | |
|---|---|---|---|
| Base plasticity/recov ery (mm) | 300/320 | 290/308 | 297/326 |
| Mole % vinyl on gum | none | 0.60 | 1.0 |

| **Cured properties** | | | |
|---|---|---|---|
| Durometer ShA ASTM D2240 | 51 | 63 | 58 |
| Tensile (Mpa)ASTM D412 | 7.95 | 7.52 | 7.39 |
| Tear Die B (kNm), ASTM D624 | 26.3 | 12.6 | 10.4 |
| Elongation (%)ASTM D412 | 328 | 154 | 164 |
| Modulus 100% (MPa) ASTM D412 | 246 | 660 | 678 |
| Resiliency Bashore (%Rebound) ASTM D2632) | 14 | 15 | 19 |
| Compression Set (%) (22 hr/177°C.) | 6.5 | 9.9 | 9.7 |
| Specific gravity (g/cc) | 1.56 | 1.60 | 1.59 |
| Volume Change in RFB, 24 hr@23°C, ASTM D471 | 14.9 | 14.0 | 14.2 |
| g/cc = g/cm3 | | | |

## Claims

1. A fluorosilicone composition comprising:
(A) poly(trifluoropropyl)organosiloxane,
(B) greater than 35 weight percent reinforcing silica filler, based on the weight of the composition, where the silica filler has a BET surface area of less than 50 m²/g,
(C) a filler treating agent added in an amount sufficient to allow filler incorporation into the polymer,
(D) a curing component in an amount sufficient to cure the composition to an elastomer,
(E) 0 to 10 weight parts vinylmethyldi(N-alkylacetamide)silane per 100 parts of component (A),
(F) 0 to 10 weight percent, based on the total composition, of a fluoropolymer powder, and
(G) 0 to 2.5 weight percent , based on the total composition, of a polyvinyldimethylsiloxane fluid.

2. The composition according to claim 1, wherein the poly(trifluoropropyl) organosiloxane is substantially free from pendant vinyl groups.

3. The composition according to claim 1 or 2, wherein the reinforcing silica filler (B) is a fumed silica.

4. The composition according to any of claims 1 to 3, wherein the silica filler (B) has a BET surface area of 10 to less than 50 m²/g.

5. The composition according to any of claims 1 to 4, comprising 1 part by weight of the filler treating agent (C) for from 10 to 20 parts by weight of reinforcing silica filler (B).

6. The composition according to any of claims 1 to 5, where component (C) is an oligomeric hydroxyl end-blocked polytrifluoropropyl-methylsiloxane comprising 3 to 7 methylsiloxy units.

7. The composition according to any of claims 1 to 6, where the curing agent is a peroxide catalyst selected from ditertiary-butyl peroxide, tertiary butyl perbenzoate, dicumyl peroxide, 2,5-bis(t-butylperoxy) -2,5-dimethyl hexane and tert-butylperoxy isopropyl carbonate.

8. The composition according to any of claims 1 to 7, where the curing agent comprises a mixture of organohydrogensiloxane and a platinum-group metal hydrosilation catalyst.
